# EUROPEAN PATENT SPECIFICATION

(11) **EP 1 710 364 B1**
(45) Date of publication and mention of the grant of the patent: **21.01.2009**
(21) Application number: 06005805.4
(22) Date of filing: 22.03.2006
(51) Int. Cl.: E04B 5/23, F16B 35/04

(54) **Stud-connector for the connection of a concrete casting onto an iron beam**
Stehbolzen fur die Verbindung zwischen einem Betonguss und einem Eisenträger
Goujon pour la connection entre un coulage de béton et une poutre en fer

(30) Priority: 08.04.2005 IT VI20050099
(43) Date of publication of application: 11.10.2006
(73) Proprietor: TECNARIA S.p.A, 36061 Bassano del Grappa VI (IT)
(72) Inventor: Guazzo, Francesco, 36061 Bassano del Grappa (VI) (IT)
(74) Representative: Bettello, Pietro

(56) References cited:
- EP-A- 0 504 500
- EP-A- 0 742 323
- FR-A- 2 317 438
- US-A- 3 270 410

## Description

The present finding relates to a stud-connector for the connection of a concrete casting onto an iron beam, according to the preamble of claim 1.

It is known that for several years steel structures in concrete have been used, in particular, for making conglomerate plates which are sustained by metallic beams; there is therefore the need to mutually fix the beams on said steel and concrete structures.

Originally, stud-connectors of cylindrical form were used, which were electrically welded to the upper surface of the steel beams, but which came out of the aforesaid so to remain incorporated in the concrete bed of the slab.

The mounting of said connectors was carried out by means of an electrical welding operation, to be carried out on the beams already in place, which led to difficulties not always easy to overcome by the operators. In any case, notwithstanding the operator's care in undertaking the operation, the mounting was not perfect, i.e. it was susceptible to causing considerable problems of structural character on the finished works.

In the publication of European patent EP-B-0504500 of the same applicant, a stud-connector is described which comprises a cylindrical section rod, with an upper head of greater diameter and with a lower bar of slightly smaller diameter. Such stud has a shaped plate lower down, wherein a central opening is present in which an end of said bar is inserted, and it has two side openings wherein the rivets are inserted for fixing the device on the beam flange.

The device according to the finding is adapted to be mounted on such flange, either directly or by means of the interposition of a zigzag-shaped sheet, which sustains the casting of the concrete slab placed above the same.

The device described in the abovementioned document, which is also particularly useful, as well as easy to use, sometimes leads to non-perfect fixings between the rivets and the stud-connectors.

Object of the present finding is that of permitting a perfect fixing between the stud and the rivets inserted in it, avoiding the possibility of even minimal movements of the rivets in the transverse direction, avoiding problems of stability inside the fixing plant.

This is obtained, according to the finding, by providing a device according to the characterising portion of claim 1. In particular the holes wherein the rivets are inserted, as well as the portions of the rivet shanks placed in proximity with the heads of the aforesaid, have a frustoconical profile. In this manner, by firmly inserting the rivets in their seat, a stable fixing is determined of the aforesaid in their respective seats.

These and other characteristics of the finding are described below in detail, with reference to one its particular embodiments, given as a not limiting example with the aid of the attached drawing tables, where:
- Figures 1, 2 and 3 (Table I) respectively represent the side views and a top plan view of the device according to the finding;
- Figure 4 presents an enlarged view of the detail IV of the subsequent figure 6;
- Figure 5 represents an enlarged view of the detail V of figure 1;
- Figure 6 (Table II) represents a stud-connector mounted on the flange of a beam of double-"T" shape;
- Figure 7 (Table III) represents the same stud-connector, also mounted on a beam of double-"T" shape, with the interposition of a zigzag-shaped plate.

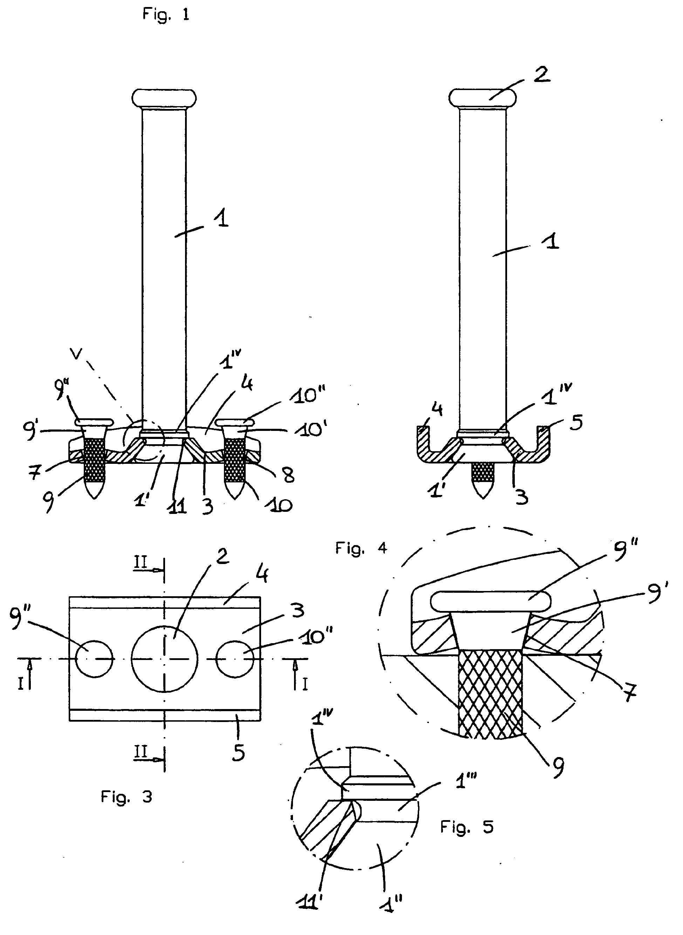

As may be seen from figures 1, 2 and 3, the stud-connector is composed of a cylindrical rod 1, which has a head 2 of greater diameter. Below, the rod is supported by a base plate 3, of substantially rectangular shape, which has two raised side edges 4, 5 adapted to stiffen the structure.

Two holes 7, 8 are foreseen in the plate, within which the rivets 9, 10 are adapted to be inserted. The latter, in a known manner, are advantageously covered with two thin cylindrical sheaths which permits maintaining said rivets (inserted in them) in mounting or insertion position, during the storage or transportation and when the fixing operation takes place.

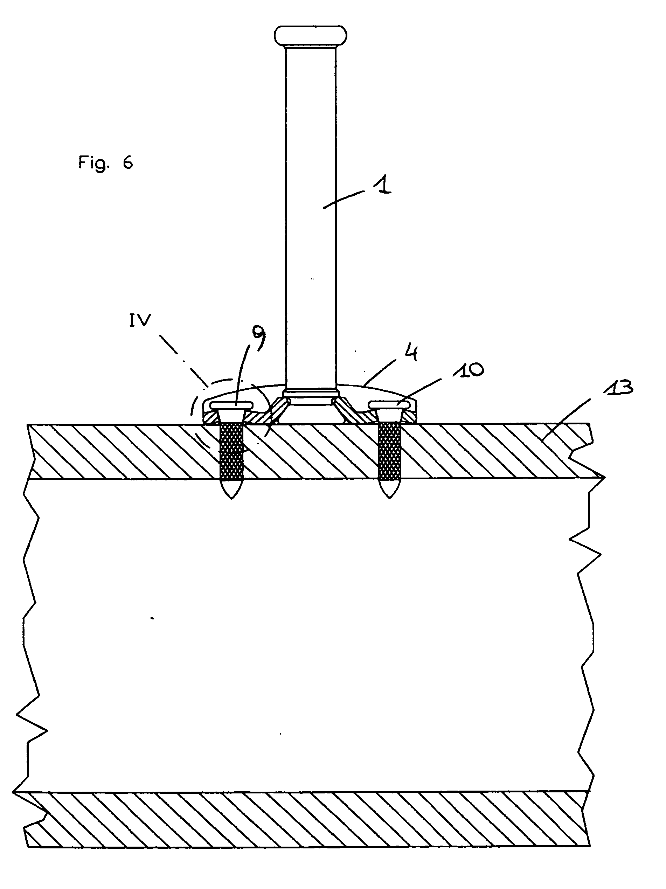

As may be seen in figure 6, the fixing operation, which is realised by means of a pneumatic riveting machine, acts on the heads 9", 10" of the rivets 9 and 10, until the tips of the same penetrate within the flange 13 of the iron beam on which the stud must be fixed.

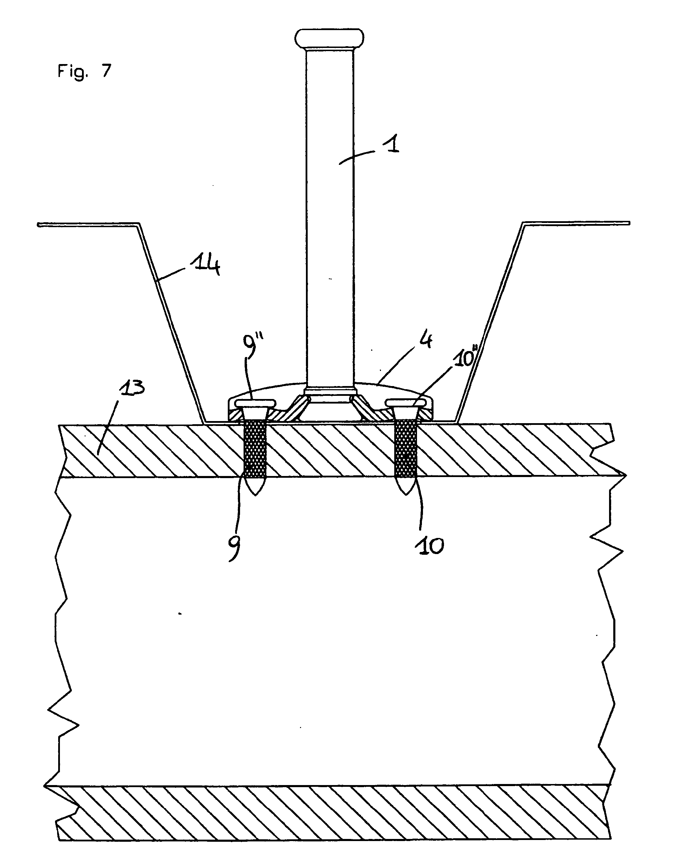

As may be seen in figure 7, such object may also be obtained by means of the interposition of a zigzag-shaped plate 14, which is interposed between the rod 1 and the top flange 13 of the beam.

The fundamental characteristic of the device according to the finding consists of the fact that, as is particularly visible in figure 4, the holes 7 and 8, in which the rivets 9 and 10 are inserted, have a frustoconical shape, with a portion of smaller section turned downward; in the same manner, an analogous shape is foreseen at the sections 9', 10' of the rivet shanks 9 and 10 placed in proximity of the respective heads 9" and 10".

In this manner, it is possible to ensure an extremely stable contact between the rivets 9 and 10 placed inside the holes 7 and 8 and the inner walls of the aforesaid holes, which permits avoiding the possibility of even minimal sliding of the rivet head in the transverse direction.

As already said above, in similar devices of known art this is susceptible to causing problems of stability for the entire fixing structure.

Moreover, in order to ensure a more effective fastening between the rod 1 and the plate 3, it is possible to foresee the fact that the portion 1' of the rod 1, which is set in contact with said plate 3, has a double frustoconical shape 1" , 1"'. Clearly, the small plate will have a hole in which one of the ends of the rod 1 is inserted, and the edges of said hole are set in the contact zone between the two frustoconical structures 1" and 1"'; all this is clearly visible in detail in figure 5.

Above said two elements, the rod has an enlarged zone 1^{IV}, which embeds the edge 11' of the hole 11 (figure 1) present in said plate 3, avoiding any possible oscillation of the rod with respect to the small plate.

Therefore, it may be seen how by means of the device according to the finding, it is possible to obtain in a rapid, secure and economical manner, the connection of a concrete casting on iron beams.

## Claims

1. STUD-CONNECTOR FOR THE CONNECTION OF A CONCRETE CASTING ONTO AN IRON BEAM, of the type comprising a cylindrical section rod (1) and a shaped plate (3), the cylindrical section rod being equipped with an upper head (2) of greater diameter, whose opposite end is fixed to the shaped plate (3), wherein a pair of holes (7, 8) is present in the shaped plate and adapted to permit the passage of the shank of rivets (9, 10),the device being **characterised in that** the holes (7, 8) have a frustoconical shape, with smaller section portion turned downward, as an analogous conformation is foreseen at the sections (9', 10') near the heads (9", 10'') of the rivets (9, 10), and **in that** the portion (1') of the rod (1), which is set in contact with the plate (3), has a double frustoconical shape (1'', 1"'), a hole (11) being foreseen in the plate in which one of the ends of the rod is inserted and the edges (11') of said hole being set in the contact zone between the two frustoconical structures (1") and (1"'), above said two elements the rod (1) having an enlarged zone (1^{IV}), which embeds the edges (11') of the hole present in the plate (3).

2. STUD-CONNECTOR, according to claim 1 , **characterised in that** the plate (3) is foreseen with two raised side edges (4, 5) which emerge from the same.

3. STUD-CONNECTOR, according to claims 1 or 2, **characterised in that** the concrete casting is interposed by means of a zigzag-shaped plate (14), which defines such casting.

## Patentansprüche

1. Stehbolzen für die Verbindung zwischen einem Betonguss und einem Eisenträger des Typs umfassend eine Abschnittsstange (1) mit zylindrischem Profil und eine ausgeformte Platte (3), wobei die Abschnittsstange mit zylindrischem Profil mit einem oberen Kopf (2) von größerem Durchmesser versehen ist, dessen gegenüber liegendes Ende an der ausgeformten Platte (3) befestigt ist, wobei in der ausgeformten Platte ein Paar Löcher (7, 8) vorhanden und so angepasst sind, dass das Einsteckende von Nieten (9,10) hindurch passt, wobei die Vorrichtung **dadurch gekennzeichnet ist, dass** die Löcher (7, 8) eine kegelstumpfartige Form aufweisen, deren kleinerer Durchmesser nach unten weist, während eine analoge Gestaltung an den Profilen (9', 10') nahe den Köpfen (9", 10") der Nieten (9, 10) vorgesehen ist, sowie **dadurch**, dass der Abschnitt (1') der Stange (1), welcher in Kontakt mit der Platte (3) steht, eine doppelt kegelstumpfartige Form (1", 1'") aufweist, in der Platte ein Loch (11) vorgesehen ist, in welches ein Ende der Stange eingesetzt wird, und die Kanten (11') dieses Lochs in der Kontaktzone zwischen den beiden kegelstumpfartigen Strukturen (1") und (1"') angeordnet sind und die Stange (1) oberhalb der beiden genannten Elemente eine vergrößerte Zone (1^{IV}) aufweist, welche die Kanten (11') des in der Platte (3) vorhandenen Lochs einschließt.

2. Stehbolzen nach Anspruch 1, **dadurch gekennzeichnet, dass** an der Platte (3) zwei erhabene Seitenränder (4, 5) vorgesehen sind, die aus dieser hervortreten.

3. Stehbolzen nach Anspruch 1 oder 2, **dadurch gekennzeichnet, dass** zwischen den Betonguss eine zickzackförmige Platte (14) eingefügt ist, die diesen Guss definiert.

## Revendications

1. Goujon pour la connexion d'une pièce coulée en béton à une poutre en fer, du type comprenant une tige à section cylindrique (1) et une plaque en forme (3), la tige à section cylindrique étant équipée d'une tête supérieure (2) de grand diamètre, dont l'extrémité opposée est fixée à la plaque en forme (3), dans lequel une paire de trous (7, 8) pratiqués dans la plaque en forme sont prévus pour permettre le passage des tiges de rivets (9, 10), le dispositif étant **caractérisé en ce que** les trous (7, 8) ont une forme tronconique, dont la partie de petite section est orientée vers le bas, comme une conformation analogue prévue au niveau des sections (9', 10') proches des têtes (9", 10") des rivets (9, 10), et **en ce que** la partie (1') de la tige (1), qui est mise en contact avec la plaque (3), a une forme de double cône (1", 1'"), un trou (11) étant pratiqué dans la plaque dans laquelle une des extrémités de la tige est insérée et les bords (11') dudit trou étant disposés dans la zone de contact entre les deux structures de forme tronconique (1") et (1"'), la tige (1) ayant au-dessus desdits deux éléments une zone agrandie (1^{IV}), qui forme les bords (11') du trou pratiqué dans la plaque (3).

2. Goujon selon la revendication 1, **caractérisé en ce que** la plaque (3) est prévue avec des bords latéraux verticaux (4, 5) s'érigeant à partir de celle-ci.

3. Goujon selon la revendication 1 ou 2, **caractérisé en ce que** la pièce coulée en béton est interposée au moyen d'une plaque en forme de zigzag (14) qui forme cette pièce coulée.
